# EUROPÄISCHE PATENTANMELDUNG

(11) **EP 1 054 253 A2**
(43) Veröffentlichungstag der Anmeldung: **22.11.2000**
(21) Anmeldenummer: 00108069.6
(22) Anmeldetag: 25.04.2000
(51) Int. Cl.: G01N 22/04

(54) **Feuchtigkeitsmessvorrichtung für den Innenraum eines Kraftfahrzeugs**

(30) Priorität: 21.05.1999 DE 19923497
(71) Anmelder: Volkswagen Aktiengesellschaft, 38436 Wolfsburg (DE)
(72) Erfinder: Grollmisch, Mike, Dipl.-Ing., 38446 Wolfsburg (DE); Kamp, Birger, Dr., 38104 Braunschweig (DE); Hauenschild, Andreas, 38312 Achin (DE)

(57) **Zusammenfassung**

Feuchtigkeitsmeßvorrichtung für den Innenraum eines Kraftfahrzeugs, umfassend mindestens eine Mikrowellensendeeinheit (4) und mindestens eine Mikrowellenempfangseinheit (5), wobei die Frequenz der verwendeten Mikrowellen im Bereich der Mikrowellenabsorptionsfrequenzen von Wasser liegt und die feuchtigkeitsbedingte Absorption der Mikrowellenstrahlung (10) zwischen der mindestens einen Mikrowellensendeeinheit (4) und der mindestens einen Mikrowellenempfangseinheit (5) von der Feuchtigkeitsmeßvorrichtung ermittelt werden kann, wobei die mindestens eine Mikrowellensendeeinheit (4) und die mindestens eine Mikrowellenempfangseinheit (5) so in der Feuchtigkeitsmeßvorrichtung angeordnet sind, daß die von der mindestens einen Mikrowellensendeeinheit (4) ausgehende Mikrowellenstrahlung nach Reflexion an einem die Mikrowellenstrahlung der verwendeten Frequenz zumindest teilweise reflektierenden Karosseriebauteil (12) des Kraftfahrzeugs von der mindestens einen Mikrowellenempfangseinheit (5) detektiert werden kann.

## Beschreibung

Die vorliegende Erfindung betrifft eine Feuchtigkeitsmeßvorrichtung für den Innenraum eines Kraftfahrzeugs, umfassend mindestens eine Mikrowellensendeeinheit und mindestens eine Mikrowellenempfangseinheit, wobei die Frequenz der verwendeten Mikrowellen im Bereich der Mikrowellenabsorptionsfrequenzen von Wasser liegt und die feuchtigkeitsbedingte Absorption der Mikrowellenstrahlung zwischen der mindestens einen Mikrowellensendeeinheit und der mindestens einen Mikrowellenempfangseinheit von der Feuchtigkeitsmeßvorrichtung ermittelt werden kann.

Ein Qualitätskriterium bei der Fahrzeugproduktion ist die Dichtheit der Fahrzeuge gegenüber Wasser. Kein Wasser darf unter normalen Betriebsbedingungen in den Innenraum, das heißt in die Fahrgastzelle oder den Kofferraum, gelangen. Zur Sicherstellung dieses Qualitätsziels werden die Fahrzeuge in einem Prüfraum intensiv mit Wasser berieselt und anschließend geprüft. Im ersten Schritt findet eine visuelle Kontrolle statt, bei der eingedrungene Feuchtigkeit auf Oberflächen gesucht wird. Feuchtigkeit, die unter Verkleidungen oder Teppichböden gelangt ist, wird in einem zweiten Schritt mit Hilfe von sogenannten Einstechfühlern detektiert. Eingedrungene Feuchtigkeit kann sich je nach Eintrittsort an verschiedenen Stellen sammeln. Die Stelle hängt im wesentlichen vom Eintrittsort, der Wassermenge, der Prüfdauer und der Zeitspanne zwischen Berieselung und Suche ab. Auch spielt die Beschaffenheit der Umgebungsmedien eine Rolle, so verlangsamt zum Beispiel ein saugfähiger Teppichboden die Ausbreitungsgeschwindigkeit der eingedrungenen Feuchtigkeit. Deshalb werden in der Praxis mehrere Stellen nach Feuchtigkeitsansammlungen untersucht.

Bei den oben genannten Einstechfühlern handelt es sich im wesentlichen um zwei Elektroden, welche an signifikanten Stellen, beispielsweise durch den Teppichboden gestoßen werden. Die Feuchtigkeit läßt sich anhand der Änderung des Widerstandes beziehungsweise Leitwerts zwischen den Elektroden nachweisen.

Als nachteilig erweist sich jedoch die Beschädigung von Teppich und Lackoberflächen. Zudem brechen die Meßelektroden leicht ab und lassen sich bei den heutzutage üblichen dicken Teppichböden nur mit erheblichem Kraftaufwand bis auf den Grund stoßen.

Eine weitere Feuchtigkeitsmeßvorrichtung, welche die Feuchtigkeit auf der Basis einer Widerstandsänderung bestimmt, ist aus der US-PS 4 270 085 bekannt. Die hier beschriebene Meßanordnung ist allerdings nur für einen stationären Einsatz, beispielsweise zur Messung der relative Luftfeuchtigkeit innerhalb eines Mikrowellenofens, vorgesehen. Darüber hinaus kann mit dieser Vorrichtung nur Oberflächenfeuchtigkeit bestimmt werden.

Eine Feuchtigkeitsmeßvorrichtung der eingangs genannten Art ist aus der US-PS 4 674 325 bekannt. Dabei wird eine Vorrichtung beschrieben, welche beispielsweise den Feuchtigkeitsgehalt von Papier bei der Herstellung bestimmen kann. Das Papier wird dabei zwischen einer Mikrowellensendeeinheit und einer Mikrowellenempfangseinheit hindurchgeführt und eine kontinuierliche Messung des Feuchtigkeitsgehalts durch die Absorption der Mikrowellenstrahlung durchgeführt.

Beide Vorrichtungen sind jedoch für einen Einsatz bei der Messung von Feuchtigkeit im Fahrzeuginnenraum ungeeignet, da unter anderem auch die Feuchtigkeit detektiert werden muß, welche als Wasserfilm unterhalb des eigentlichen Stoffes bzw. Teppichs vorhanden sein kann. Die Vorrichtung nach US-PS 4 674 325 kann zu diesem Zweck ebenfalls nicht eingesetzt werden, da das Testmaterial zumindest zwischen dem Mikrowellensender und Mikrowellenempfänger angeordnet sein muß, welches sich beispielsweise bei einem fertig verlegten Teppichboden als schwierig erweisen beziehungsweise durch das Bodenblech verhindert würde.

Das der Erfindung zugrundeliegende Problem ist es, eine Feuchtigkeitsmeßvorrichtung der eingangs genannten Art bereitzustellen, welche leicht handhabbar ist und gleichermaßen eine zerstörungsfreie Prüfung des Feuchtigkeitsgehalts zuläßt.

Erfindungsgemäß wird dieses Problem dadurch gelöst, daß die mindestens eine Mikrowellensendeeinheit und die mindestens eine Mikrowellenempfangseinheit so in der Feuchtigkeitsmeßvorrichtung angeordnet sind, daß die von der mindestens einen Mikrowellensendeeinheit ausgehende Mikrowellenstrahlung nach Reflexion an einem die Mikrowellenstrahlung der verwendeten Frequenz zumindest teilweise reflektierenden Karosseriebauteil des Kraftfahrzeugs von der mindestens einen Mikrowellenempfangseinheit detektiert werden kann. Durch diese Anordnung werden die speziellen Randbedingungen, insbesondere die Fahrzeugbleche als Reflektionsflächen, ausgenutzt, um eine zerstörungsfreie und einfache Möglichkeit zur Detektion von Feuchtigkeit im Fahrzeuginnenraum bereitzustellen. Die Benutzung der vorhandenen Fahrzeugbleche als Reflektionsflächen begünstigt ebenfalls die kompakte Bauweise, da Mikrowellensendeeinheit und Mikrowellenempfangseinheit in einem Bauteil vereint werden können.

Eine weitere vorteilhafte Ausgestaltung der Erfindung ergibt sich durch die Verwendung einer Mikrowellenstrahlung mit einer Frequenz von ca. 10 GHz. Zum Nachweis von Feuchtigkeit wird die Schwächung der Mikrowellenstrahlung während des Durchtritts durch das zu vermessende Material ermittelt. Durch Wechselwirkung zwischen der Mikrowellenstrahlung und den Wassermolekülen erfolgt insbesondere für Mikrowellenfrequenzen im Bereich der starken Absorptionsbande des Wassers bei etwa 10 GHz eine starke Dämpfung der Mikrowellenstrahlung. Bei dieser Mikrowellenfrequenz wird beispielsweise bei einer Wasserschichtdicke von 100 µm das Meßsignal bereits um 73% abgeschwächt, was eine optimale Meßgenauigkeit bedeutet.

Eine weitere vorteilhafte Ausgestaltung der Erfindung besteht darin, ein kompaktes Gehäuse für die Feuchtigkeitsmeßanordnung vorzusehen. Hierdurch wird eine leichte Handhabbarkeit und flexible Einsatzmöglichkeit sichergestellt.

Durch die Verwendung einer Auswerteelektronik und einer Auswertesteuerung wird eine sichere und unproblematische Funktion sichergestellt. Die wesentlichen Meßparameter können in einfacher Form abgelegt werden und der Bediener kann sich im wesentlichen auf die korrekte Positionierung der Feuchtigkeitsmeßanordnung konzentrieren.

Als besonders vorteilhaft erweist sich die Verwendung eines Akkus als Energiequelle, da somit eine ausreichend lange Betriebsbereitschaft gewährleistet werden kann.

Durch die Verwendung eines digitalen oder analogen Anzeigeinstruments, kann der Absorptionsgrad problemlos abgelesen werden. Weiterhin können Veränderungen hinsichtlich des Feuchtigkeitsgehalts bzw. Feuchtigkeitsgebiete relativ unproblematisch eingegrenzt werden.

Unterstützt wird der Benutzer weiterhin durch eine optische und/oder akustische Warnvorrichtung, welche auf eine Schwellenwert hinsichtlich des Absorptionsgrads eingestellt werden kann. Der Benutzer ist somit nicht gezwungen das Anzeigeinstrument ständig abzulesen und kann sich eingehender auf die Ausrichtung der Meßanordnung konzentrieren.

Als besonders vorteilhaft erweist sich die Kombination von Auswerteelektronik, Steuerelektronik, Akkusatz, Anzeige zur Visualisierung des Absorptionsgrads und optische / akustische Warnvorrichtung in einem kompakten, zylinderförmigen Gehäuse. Die Meßanordnung kann somit völlig autark und ohne störende Verkabelung eingesetzt werden, wodurch insbesondere der Einsatz in schwer zugänglichen Bereichen ermöglicht wird.

Durch die Verwendung einer Sender-/Empfängerkombination wird eine raumsparende Anordnung bereitgestellt, welche gleichzeitig einen definierten Abstand zwischen Mikrowellenquelle und Mikrowellensenke gewährleistet. Die Wahl eines definierten Abstands ist durchaus zweckmäßig, da der Empfang der Mikrowellenstrahlung unter einem bestimmten Reflektionswinkel die Reproduzierbarkeit der Meßergebnisse gewährleistet.

Die Funktion der Meßvorrichtung wird ebenfalls durch die Verwendung einer Abschirmung in Meßrichtung der Sender-/Empfängerkombination begünstigt. Eine Abschirmung verhindert den seitlichen Austritt von Mikrowellenstrahlung, welches zum einen das Ergebnis verfälschen könnte und zum anderen den Benutzer gefährden könnte. Weiterhin wird durch eine geeignete Abschirmung eine definierte Meßfläche geschaffen.

Als besonders vorteilhafte Abschirmung hat sich die Verwendung einer hohlen Halbkugel, ähnlich einem Taschenlampenreflektor, erwiesen, welche aus einem Metall besteht, daß Mikrowellenstrahlung reflektieren kann und in ihrem Pol eine Durchtrittsöffnung für von der Sender-/Empfängerkombination ausgehende und eingehende Mikrowellenstrahlung besitzt. Durch diese Maßnahme wird, neben einer optimalen Abschirmung, ein weiterer Vorteil erreicht. An geneigten oder nicht ebenen Bodengeometrien werden die Mikrowellen nicht mehr direkt in Richtung der Mikrowellenempfangseinheit reflektiert. Verwendet man ein Abschirmgehäuse aus reflektierendem Metall, wird die ausgesandte Mikrowelle indirekt über die Abschirmung zur Mikrowellenempfangseinheit reflektiert. Das Abschirmgehäuse kann dabei die reflektierte Strahlung auf die Mikrowellenempfangseinheit fokussieren.

In diesem Zusammenhang kann durch die Verwendung einer weiteren oder mehrerer weiterer Mikrowellensende- und/oder -empfangseinheiten eine zusätzliche potentielle Meßungenauigkeit ausgeblendet werden. Weist die zu untersuchende Oberfläche Höhenunterschiede um ein ungradzahliges Vielfaches der halben Wellenlänge der Mikrowelle auf, so können Interferenzen das empfangene Meßsignal abschwächen und das Ergebnis verfälschen. Der Einfluß des Effektes kann durch den Einsatz mehrerer vorzugsweise überlappender Teilmeßbereiche reduziert werden. Die Teilmeßbereiche können beispielsweise durch die Verwendung zweier oder mehrerer Mikrowellensendeeinheiten erzeugt werden. Die Meßflächen der einzelnen Mikrowellensendeeinheiten sind kleiner als die gesamte Meßfläche und ergeben die Gesamtfläche. Zur Verhinderung von Interferenzen können die Mikrowellensendeeinheiten zeitlich versetzt angesteuert und ausgewertet werden. Interferenzen aufgrund von Höhenunterschieden wirken sich nur in einigen der Teilmeßbereiche aus, wodurch die Unterscheidung zwischen Höhenunterschied und Feuchtigkeit und die Grundlage einer detaillierten Analyse gegeben ist. Die Auswertung aller empfangenen Signale führt zur Erhöhung der Sicherheit gegenüber einer Fehlinterpretation.

Zur weiteren Vermeidung von Fehlinterpretationen können zusätzlich an der Auflagefläche der Abschirmung Elektroden vorgesehen sein. Bei dem vorgestellten Meßprinzip kann nicht festgestellt werden, ob sich das Wasser ober- oder unterhalb des Teppichbodens befindet. Durch die Elektroden kann jedoch Wasser zwischen der Oberfläche des Teppichbodens und dem Abschirmgehäuse festgestellt werden. Diese Information kann die Auswerteelektronik mit einer entsprechende Warnung ausgeben.

Im folgenden wird die vorliegende Erfindung anhand eines Ausführungsbeispiels unter Bezugnahme auf die beiliegenden Zeichnungen näher beschrieben. Dabei zeigen
- Fig. 1: eine schematische Darstellung einer erfindungsgemäßen Feuchtigkeitsmeßvorrichtung;
- Fig. 2a: eine schematische Darstellung des Meßprinzips einer erfindungsgemäßen Feuchtigkeitsmeßvorrichtung bei einer Meßanordnung ohne Wasserfilm;
- Fig. 2b: eine schematische Darstellung des Meßprinzips einer erfindungsgemäßen Feuchtigkeitsmeßvorrichtung bei einer Meßanordnung mit Wasserfilm.

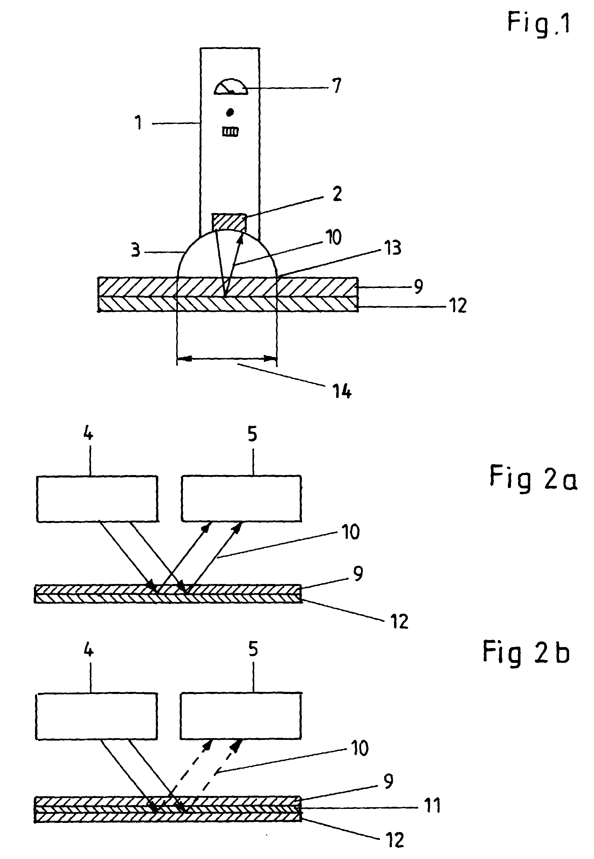

Wie aus Figur 1 ersichtlich, kann eine Feuchtigkeitsmeßvorrichtung im wesentlichen ein zylinderförmiges Gehäuse 1 und eine Sender-/Empfängerkombination 2 für Mikrowellen umfassen, die einen Mikrowellenstrahl einer geeigneten Frequenz, beispielsweise 10 GHz, in Richtung eines Testobjekts, beispielsweise eines Teppichbodens 9, emittieren und die reflektierte Mikrowellenstrahlung detektieren kann. Weiterhin ist eine Abschirmung 3 unterhalb der Sender-/Empfängerkombination 2 vorgesehen, welche die Form einer hohlen Halbkugel aufweisen kann und in ihrem Pol eine Durchtrittsöffnung für die Mikrowellenstrahlung 10 besitzt. Im Betriebszustand ist die dem Pol gegenüberliegende Öffnung der Abschirmung 3 auf das zu analysierenden Objekts gerichtet, bzw. die kreisförmige Kante der Abschirmung 3 setzt auf dem Objekt auf. Mit dem Bezugszeichen 14 ist in Fig. 1 der erfaßbare Meßbereich gekennzeichnet.

Das Gehäuse 1 als solches kann eine Auswertelektronik, eine Auswertsteuerung und einen Akkusatz umfassen. Weiterhin kann eine Anzeige 7 zur Darstellung des Absorptionsgrades sowie eine optische und akkustische Warnvorrichtung 8 eingebaut sein. Die Bauweise sowie die Integration aller zur Messung der Feuchtigkeit benötigten Komponenten gestatten eine sehr kompakte Gestaltung der Feuchtigkeitsmeßvorrichtung, welche eine unproblematische Messung der Feuchtigkeit beispielsweise auf Teppichböden 9 an vergleichsweise schwer zugänglichen Stellen im Fahrzeuginnenraum zuläßt.

Während des Betriebs wird die Mikrowellenstrahlung 10 einer Sendeeinheit 4 der Sender-/Empfängerkombination 2 in Richtung des Teppichbodens 9 und eines darunter angeordneten Bodenbleches 12 abgestrahlt. Ist nach Fig. 2a kein Wasserfilm 11 oder Feuchtigkeit im Teppichboden 9 vorhanden, so wird die Mikrowellenstrahlung 10 durch das Bodenblech 12 ohne große Verluste zu einer Mikrowellenempfangseinheit 5 der Sender-/Empfängerkombination 2 zurückreflektiert. Die Auswertelektronik mißt den Absorptionsgrad und zeigt diesen über die Anzeige 7 zur Darstellung des Absorptionsgrads an.

Befindet sich Wasser in Form von Feuchtigkeit im Teppichboden 9 oder existiert ein Wasserfilm 11 wie in Fig. 2b unterhalb des Teppichbodens 9 angedeutet, so wird die Mikrowellenstrahlung 10 nicht mehr in ihrer vollen Intensität reflektiert, so daß ein schwächeres Reflektionssignal von der Mikrowellenempfangseinheit 5 der Sender-/Empfängerkombination 2 gemessen, der Auswerteelektronik weitergeleitet und über die entsprechende Anzeige 7 zur Darstellung des Absorptionsgrads bzw. Feuchtigkeitsgehalts angezeigt werden kann.

Da das vorgestellte Meßprinzip nicht feststellen kann, ob sich das Wasser ober- oder unterhalb des Teppichbodens befindet, sind zusätzlich an der Auflagefläche der Abschirmung 3 Elektroden 13 angeordnet, welche Wasser zwischen der Oberfläche des Teppichbodens und dem Abschirmgehäuse feststellen können. Diese Information wird ebenfalls an die Auswertelektronik weitergeleitet, entsprechend ausgewertet und angezeigt.

Darüber hinaus kann die Auswertelektronik so eingestellt werden, daß ab einem bestimmten, vordefinierten Absorptionsgrad eine optische und / oder akkustische Warnung ausgegeben wird.

### BEZUGSZEICHENLISTE

- 1: Gehäuse
- 2: Sender-/Empfängerkombination
- 3: Abschirmung
- 4: Mikrowellensendeeinheit
- 5: Mikrowellenempfangseinheit
- 7: Anzeige des Absorptionsgrads
- 8: Optische und / oder Akustische Warnvorrichtung
- 9: Teppichboden
- 10: Mikrowellenstrahl
- 11: Wasserfilm
- 12: Bodenblech
- 13: Elektroden
- 14: Meßbereich

## Patentansprüche

1. Feuchtigkeitsmeßvorrichtung für den Innenraum eines Kraftfahrzeugs, umfassend mindestens eine Mikrowellensendeeinheit (4) und mindestens eine Mikrowellenempfangseinheit (5), wobei die Frequenz der verwendeten Mikrowellen im Bereich der Mikrowellenabsorptionsfrequenzen von Wasser liegt und die feuchtigkeitsbedingte Absorption der Mikrowellenstrahlung (10) zwischen der mindestens einen Mikrowellensendeeinheit (4) und der mindestens einen Mikrowellenempfangseinheit (5) von der Feuchtigkeitsmeßvorrichtung ermittelt werden kann, **dadurch gekennzeichnet, daß** die mindestens eine Mikrowellensendeeinheit (4) und die mindestens eine Mikrowellenempfangseinheit (5) so in der Feuchtigkeitsmeßvorrichtung angeordnet sind, daß die von der mindestens einen Mikrowellensendeeinheit (4) ausgehende Mikrowellenstrahlung nach Reflexion an einem die Mikrowellenstrahlung der verwendeten Frequenz zumindest teilweise reflektierenden Karosseriebauteil (12) des Kraftfahrzeugs von der mindestens einen Mikrowellenempfangseinheit (5) detektiert werden kann.

2. Feuchtigkeitsmeßvorrichtung nach Anspruch 1, dadurch gekennzeichnet, daß es sich bei der verwendeten Frequenz um etwa 10 GHz handelt.

3. Feuchtigkeitsmeßvorrichtung nach Anspruch 1 oder 2, dadurch gekennzeichnet, daß sie ein kompaktes vorzugsweise zylinderförmiges Gehäuse (1) umfaßt.

4. Feuchtigkeitsmeßvorrichtung nach einem der Ansprüche 1 bis 3, dadurch gekennzeichnet, daß sie eine Auswerteelektronik und eine Auswertesteuerung umfaßt.

5. Feuchtigkeitsmeßvorrichtung nach einem der Ansprüche 1 bis 4, dadurch gekennzeichnet, daß sie einen Akkusatz umfaßt.

6. Feuchtigkeitsmeßvorrichtung nach einem der Ansprüche 1 bis 5, dadurch gekennzeichnet, daß sie eine Anzeige (7) zur Visualisierung des Absorptionsgrads umfaßt.

7. Feuchtigkeitsmeßvorrichtung nach einem der Ansprüche 1 bis 6, dadurch gekennzeichnet, daß sie eine optische und/oder akustische Warnvorrichtung (8) umfaßt.

8. Feuchtigkeitsmeßvorrichtung nach Anspruch 7, dadurch gekennzeichnet, daß Auswerteelektronik, Steuerelektronik, Akkusatz, Anzeige (7) zur Visualisierung des Absorptionsgrads (7) und optische und/oder akustische Warnvorrichtung (8) in dem kompakten vorzugsweise zylinderförmigen Gehäuse (1) untergebracht sind.

9. Feuchtigkeitsmeßvorrichtung nach einem der Ansprüche 1 bis 8, dadurch gekennzeichnet, daß die mindestens eine Mikrowellensendeeinheit (4) und die mindestens eine Mikrowellenempfangseinheit (5) in einer Sender-/Empfängerkombination (2) zusammengefaßt sind.

10. Feuchtigkeitsmeßvorrichtung nach Anspruch 9, dadurch gekennzeichnet, daß eine Abschirmung (3) in Meßrichtung der Sender-/Empfängerkombination (2) vorgesehen ist.

11. Feuchtigkeitsmeßvorrichtung nach Anspruch 10, dadurch gekennzeichnet, daß es sich bei der Abschirmung (3) um eine hohle Halbkugel handelt, welche vorzugsweise aus einem die Mikrowellenstrahlung (10) reflektierenden Metall besteht, mit ihrem Pol der Sender-/Empfängerkombination (2) zugewandt ist und in ihrem Pol eine Durchtrittsöffnung für austretende und eintretende Mikrowellenstrahlung besitzt.

12. Feuchtigkeitsmeßvorrichtung nach einem der Ansprüche 1 bis 11, dadurch gekennzeichnet, daß zwei oder mehr Mikrowellensendeeinheiten (4) vorgesehen sind.

13. Feuchtigkeitsmeßvorrichtung nach Anspruch 12, dadurch gekennzeichnet, daß bei einer Anzahl von mindestens zwei Mikrowellensendereinheiten (4), diese zeitlich versetzt angesteuert werden können.

14. Feuchtigkeitsmeßvorrichtung nach einem der Ansprüche 11 bis 13, dadurch gekennzeichnet, daß Elektroden (13) auf dem kreisförmigen Rand der Abschirmung (3) vorgesehen sind.
